# EUROPEAN PATENT SPECIFICATION

(11) **EP 0 278 212 B1**
(45) Date of publication and mention of the grant of the patent: **01.09.1993**
(21) Application number: 88100051.7
(22) Date of filing: 05.01.1988
(51) Int. Cl.: G02B 6/32, C03B 37/14

(54) **Method and apparatus for forming lens-ended optical fibres**
Vorrichtung und Verfahren zur Herstellung von mit Linsen endenden optischen Fasern
Procédé et dispositif pour la fabrication de fibres optiques terminées par des lentilles

(30) Priority: 13.01.1987 US 2886; 15.01.1987 US 3970
(43) Date of publication of application: 17.08.1988
(73) Proprietor: ITT INDUSTRIES, INC., New York, NY 10022 (US)
(72) Inventor: Borsuk, Leslie Morton, Los Alamitos CA 90720 (US); Fanning, John William, Lansdale, PA 19446 (US)
(74) Representative: Vaufrouard, John Charles

(56) References cited:
- DE-A- 3 407 413
- GB-A- 2 085 678
- GB-A- 2 118 319
- INSTRUMENTS AND EXPERIMENTAL TECHNIQUES, vol. 28, no. 1, part 2, January-February 1985, pages 246-247, New York, US; V.D. NAZAROV et al.: " Supply source for electric arc welding of optical fibres"
- JOURNAL OF LIGHTWAVE TECHNOLOGY, vol. LT-2, no. 1, February 1984, pages 25-31, New York, US; "Fusion mass-splices for optical fibers using high-frequency discharge"
- REVIEW OF THE ELECTRICAL COMMUNICATION LABORATORIES, vol. 31, no. 1, January 1983, pages 109-116, Tokyo, JP; N. KASHIMA et al.: "Design and performance of newly developed optical fiber fusion splicing machine"

## Description

The present invention relates to a method and apparatus for providing optical fibers with lenses.

Optical fibers can be coupled by melting their ends into lenses and placing the lenses in alignment and a predetermined distance apart. A lens can be formed by placing the tips of a pair of electrodes on opposite sides of a fiber end portion and establishing an arc between the electrodes that melts the fiber end portion into a lens. Early experiments by Applicant involved the establishment of a DC arc of constant current at a current amplitude continued for a period of time which resulted in a lens of a diameter greater than 25% of the fiber diameter. While the lens produced in this manner was able to couple light from one optical fiber to another, its mechanical reliability was not as great as hoped for. It was found that the lensed fiber had a weak spot lying a short distance behind the root of the lens, where the fiber was most likely to break. In pull tests, for example, the tensile strength of the fiber immediately behind the lens was only 40% of the tensile strength of the rest of the fiber. Also, multiple microscopic crevices could be observed in the lens surface, which could absorb moisture and develop cracks in the lens.

The use of an electric arc to melt the fiber into a lens was initially patterned on the use of electric arcs in fusing the ends of abutting optic fibers to splice them. In splicing, however, the fiber ends are merely softened with minimum deformation rather than being melted into balls, and in splicing problems are not encountered as to great weakening of the fiber behind the spliced ends or in the development of crevices which can cause damage to the fiber end.

In splicing, an arc of several milliamperes may be applied for a period of perhaps two seconds, to soften the ends of abutting fibers to splice them. An AC arc, which may be of low frequency, may be applied to produce a more uniform arc. When a similar setup was used in an attempt to melt an optic fiber into a lens, but with a higher current, the lensed region was found to be fairly brittle and to exhibit considerable crevices.

It is already known from German Patent DE-A-3407413 to provide an optical fiber with an attachment lens in which a ball lens is formed at one end of the glass rod which is secured at its other end to an optical fiber. The ball lens is produced preferably by subjecting a glass rod to a high frequency arc discharge of about 10-50 kilohertz.

A method and apparatus for using an electric high frequency arc discharge to melt a fiber end portion into a lens, which produces lensed fibers of high strength and smooth surfaces having a minimum amount of crevices would be of considerable value and the present invention is directed to such method and apparatus which are simple yet very effective.

In accordance with one aspect of the present invention there is provided a method of forming a lens at the end of an optical fibre, including the steps of locating the end of the optical fiber between a pair of electrodes, establishing an electric arc between the electrodes for melting the end of the optical fiber to provide a lens having a diameter greater than that of the optical fiber and thereafter repeatedly terminating and restarting the arc a plurality of thousands of times per second comprising the step of varying the arc current substantially sinusoidally for a predetermined period of time in order to vibrate the molten end of the optical fiber yet avoiding creation of harmonics and thereby improve the quality of the lens and the step of establishing an arc including delivering a series of pulses to a primary of a transformer, coupling one side of the secondary of the transformer through a capacitor to the other side of the secondary a path which includes the arc; the capacitor and the transformer forming a resonant circuit, and the frequency of the pulses being substantially equal to the resonant frequency of the resonant circuit.

The integral of the arc current with time may be sensed and the duration of the pulses varied to maintain a predetermined average arc current.

In accordance with another aspect of the present invention there is provided apparatus for forming one end of an optical fiber into a lens comprising a pair of electrodes having spaced tips, means for holding the fiber end between electrode tips, circuit means coupled to the electrodes for applying electricity to them which establishes an arc between the electrode tips of an intensity and duration which melts the fiber end into a lens having a greater diameter than that of the fiber and the circuit means being constructed for initiating an arc between the electrode tips and thereafter terminating and restarting the arc repeatedly at a rate of a plurality of thousands of times per second characterised in that the circuit means is constructed for varying the arc current substantially sinusoidally to avoid creation of harmonics, and includes: a transformer having primary and secondary windings, the secondary winding having first and second terminals means for applying pulses to the primary winding; means defining a capacitor coupling the first terminal of the secondary winding to one of the electrodes; means coupling the other of electrodes to the second terminal of the secondary winding, the inductance of the secondary winding and the reflected inductance of the primary winding together with the capacitance defining a resonant circuit of a predetermined resonant frequency, the pulse applying means being constructed to apply pulses at a rate substantially equal to the resonant frequency.

The use of a sinusoidal arc discharge avoids the creation of harmonics that might have a frequency close to a resonant mode of the optical fiber, and especially to molten glass as it is formed into a lens.

The novel features of the invention are set forth with particularity in the appended claims. The invention will be best understood from the following description when read in conjunction with the accompanying drawings.

### BRIEF DESCRIPTION OF THE DRAWINGS

Fig. 1 is a partial perspective view of apparatus for lensing an optical fiber.

Fig. 2 is a side elevation view of a portion of the apparatus of Fig. 1, showing the optical fiber during three stages of the formation of a lens thereon.

Fig. 3 is a graph showing the variation of current with time for the arc of Fig. 2.

Fig. 4 is a simplified schematic diagram of a circuit of the apparatus of Fig. 1.

### DESCRIPTION OF THE PREFERRED EMBODIMENTS

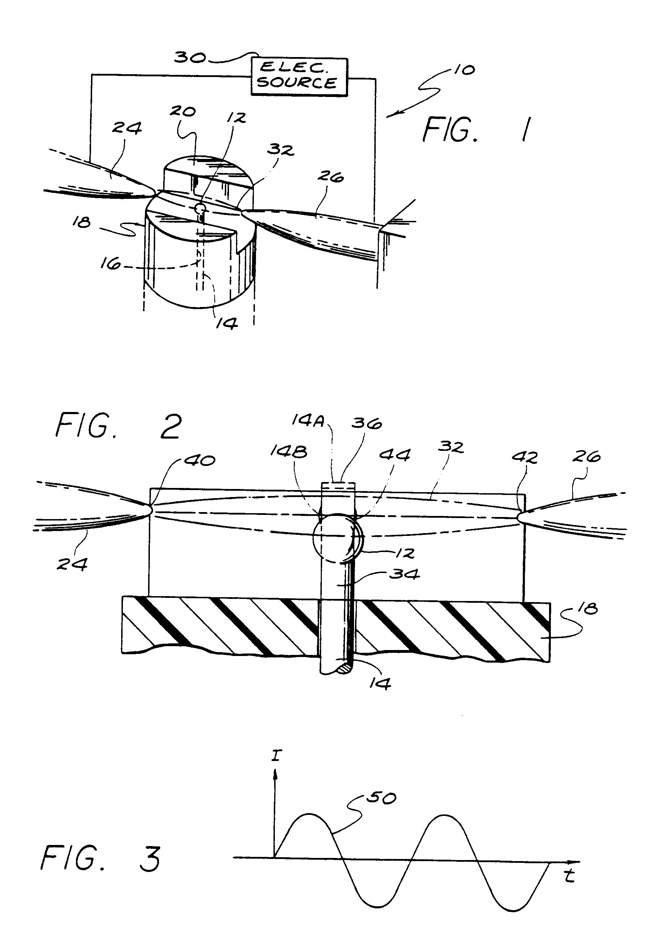

Fig. 1 illustrates a system 10 which can be used to form a lens 12 at the end of an optical fiber 14. The fiber is inserted through a longitudinal hole 16 of a contact 18 and fixed in place, with an end portion of the fiber lying about even with the tip 20 of the contact. The contact has a cross-aperture 22 near its end, in which most of the fiber end portion lies. A pair of electrodes 24, 26 are positioned on opposite sides of the optical fiber end portion, in alignment with the cross-aperature. An electrical source 30 is activated to produce a voltage between the electrodes, which results in the creation of an electric arc 32 between the tips of the electrodes, which passes across the fiber end portion to melt it. Afterwards, the contact 18 with the lensed fiber thereon can be placed with its tip 20 in abutment with another contact, to couple light from a fiber in one contact to the fiber in the other contact.

Fig. 2 illustrates an optical fiber end portion 34 during the process of forming it into a lens. The optic fiber at 14A is positioned with its extreme forward end 36 slightly above the location at 32 where the brightest portion of the arc occurs. The arc is established between a pair of electrode tips 40, 42 and initially melts a location 44 below the fiber tip, to place the fiber in the configuration 14B. The tip of the fiber falls into the molten ball, as the ball descends and grows, until it reaches the position shown at 12. The arc is stopped at or slightly before that time, and the molten ball of glass hardens to form the lens 12. The three most common optical fiber sizes are 125 um (micrometers), 140 um, and 250 um with the lenses having a diameter about 50% greater than the optic fiber diameter.

Electric arcs have been used to splice pairs of optical fibers, by heating the fibers while their ends are in contact to melt them into one another. Such arcs were then tried for melting optic fiber ends sufficiently to form lenses thereon. At first, DC arcs were used, which were difficult to control, and then relatively low frequency, e.g. 60 Hz, arcs were used.

Lensed optic fibers formed by these methods were found to be weakened and to have defective lens surfaces. Applicant then formed lenses with the electrical source modified to produce progressively higher frequencies.

It was found that arcs that were repeatedly interrupted and reestablished at frequencies of a plurality of kilohertz produced lensed fibers which were stronger near the lens, and which had a surface with fewer crevices. It was found that at still further increases in arc frequency, of over 10kHz, to 40kHz,, to 75kHz the strength of the lensed fiber and the quality of the lens improved. At an alternating current frequency of 75kHz, wherein the arc was repeatedly initiated and terminaated at a rate of 150kHz, the tensile strength of the lensed fiber was 80% of the tensile strength of a fiber without a lens. The region at or immediately behind the root of the lens was found not to be brittle, and did not break off when the lens was pushed slightly sidewardly, as occured for lenses formed with a DC arc or a low frequency arc. It was found that the actual circuitry used produced progressively higher losses and heating when used at progressively higher frequencies, and 75kHz was found to be satisfactory in that it produced a lensed fiber of high strength and good surface with a circuit of only moderate losses at the required current of about 20 milliamperes root mean square (about half as much current is used if the fiber end portion does not lie in the cross-aperature of a contact).

For optic fiber of diameters ranging from 0.127mm to 0.254mm (0.005 inch to 0.010 inch) described above, arc currents of about 10 to 40 milliamperes (root mean square) continued for a period of 3 to 6 seconds, have been found effective to melt the fiber into a lens. A separation S of electrode tips of about 1.524mm (0.060 inch) was found to provide sufficient separation to avoid the buildup of glass on the tips, while enabling a moderate voltage to be used to establish and maintain the arc. A voltage of about 10,000 volts is required to establish the arc, and a voltage of about 700 volts (peak-to-peak) is required to maintain an arc current of about 20 milliamperes (root mean square). This range of current is considerably greater than used for splicing of optic fibers, and the voltage is also greater (because of a greater electrode separation).

If a low voltage and current were sufficient, a high frequency source could be produced by a sinusoidal oscillator, whose voltage output can be increased by passing it through a transformer (with a consequent decrease in current). Where a larger high frequency power output is required, a simple electricity source includes a DC voltage source whose output is repeatedly connected and disconnected from the electrodes to produce a sequence of pulses or square waves of the desired frequency, e.g. 75kHz. The output voltage can be boosted, e.g. to 700 volts, by passing it through a transformer, and a high arc-initiation voltage, e.g. 10kilovolts, can be produced through a voltage multiplier.

While a sequence of pulses can produce a controlled arc which will form the end of an optical fiber into a lens, there is potential for degradation of the lens. The optic fiber end portion, like other devices, has many resonant modes at which it will experience large vibrations when excited at moderate amplitudes. Since the most common optic fibers and their lenses are small, the resonances occur at high frequencies. A pulse repeated at a predetermined frequency such as 75kHz produces harmonics of high amplitudes, throughout a wide frequency range. There is a significant possibility that one of these harmonics of high amplitude will be close to a resonant frequency of the optic fiber. This could be especially deleterious if a strong harmonic is near a resonant frequency of the molten glass ball as it is hardening into a solid lens, since this could cause surface waves or other distortions of the lens, which could degrade its performance. Applicant avoids the presence of numerous high frequency components in the arc, by using an arc which is substantially sinusoidal most of the time, especially near the end of the period of the arc. A sinusoidal wave has no harmonics, and a substantially sinusoidal wave has harmonics of very low amplitude, which will avoid large vibrations of the optic fiber even if they occur at a resonant frequency of the optic fiber.

Fig. 3 illustrates a waveform 50 showing the variation of Applicant's arc current with time, and showing that the current varies substantially sinusoidally to minimize the amplitude of harmonics. It may be noted that throughout numerous tests on optical fibers having diameters in the range of about 0.127mm to 0.254mm (0.005 inch to 0.010 inch) no resonances were observed or deleterious effects found for arc frequencies of about 75kHz.

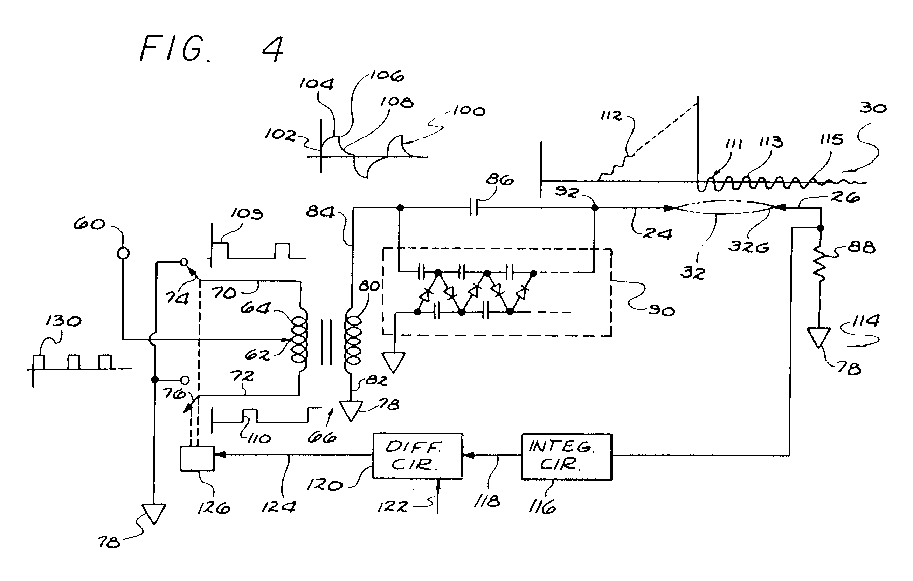

Fig. 4 is a simplified circuit diagram showing how Applicant is able to produce a substantially sinusoidal high frequency arc of considerable voltage and current. using relatively low-cost circuitry. The circuit includes a DC voltage source 69 of moderate ripple such as can be obtained by rectifying commonly available 110 volt, 60 cycle current, and partially smoothing it, all in a relatively simple well-known type of circuit. The output of the source 60 is connected to a terminal 62 of the primary winding 64 of a transformer 66. Two other terminals 70, 72 of the primary winding are connected through switches 74, 76 to ground 78. The secondary winding 80 of the transformer has one terminal 82 that is grounded, and another terminal 84 that is connected through a capacitor 86 to one of the arc-producing electrodes 24. The other electrode 26 is connected through a load resistance 88 to ground at 78, or in other words is connected to the secondary winding terminal 82.

The transformer 66 is used not only to increase the voltage input, but also its inductance is used in combination with the capacitance of the capacitor 86 to form a resonant circuit which is resonant at a predetermined frequency. The inductance of the transformer equals the inductance of the secondary winding 80 and the reflected inductance of the primary winding 64. When a voltage close to the resonant frequency of the resonant circuit is impressed on it, a resonance is created which results in the sustaining of a relatively high voltage in the circuit, which varies substantially sinusoidally. The capacitor 86 is chosen so that the resonant frequency of the resonant circuit is approximately equal to the desired frequency. e.g. 75kHz, of the arc, which is also approximately the frequency at which the switches 74, 76 are cycled. As discussed above, the maintaince of a substantially sinusoidal current in the arc is useful in avoiding large amplitude resonances in the optical fiber when it is being melted to lens it.

When an arc is to be established, a high voltage such as 10,000 volts must be impressed across the electrodes to break down the atmosphere and ionize it. Although the arc must be reestablished at intervals of about 150 kHz, a high voltage is not necessary to reestablish the arc, because the ionized atmosphere remains during the brief period between termination and reestablishment of the arc. Applicant uses a known type of voltage multiplier circuit 90, which includes multiplying capacitors 91 in series and divides 93 for repeatedly charging them, to build up the voltage at point 92 (over perhaps 100 cycles lasting about .001 second) to a voltage at which the atmosphere between the elecrtrodes breaks down to establish the arc. The resistance through the arc gap 32G then becomes low, which prevents a further building of voltage, and the voltage multiplier 90 does not serve any puspose during the rest of the few seconds during continuation of the arc. Thereafter, the sinusoidal oscillations of the resonant circuit produced a substantially sinusoidal arc current.

It may be noted that the voltage at the secondary winding terminal 84 has a shape of the type shown at 100, wherein at the beginning of a positive-going pulse, the voltage has a rapid increase at 102. Then, at 104 the transformer operates in a fly-back mode wherein its inductance causes the voltage to rise exponentially. At 106 when the input pulse suddenly drops to zero, the transformer output suddenly decreases, and then at 108 decreases exponentially towards zero. A similar negative-going voltage appears during the following negative pulse at the input to the transformer. The graphs 109, 110 show the input voltage at corresponding times. The graph 111 shows the voltage across the arc gap, which includes an initial rising portion 112, a sinusoidal portion 113 which last during most of the arc time of about 5 seconds, and a gradual decay portion 115. The gradual decay portion 115 (whose decay depends on the "Q" of the resonant circuit) avoids resonant vibrations in the molten ball of fiber just as it starts cooling into a lens.

In order to melt each of numerous optical fibers into lenses that are all of closely the same size, it is necessary the the "amount" of current during a predetermined time such as 5 seconds be the same for every fiber. However, the integral of current over a predetermined time period could vary due to the differences in local conditions such as the humidity of the atmosphere or the exact placement of a fiber and contact relative to the electrodes. To assure uniformity, Applicant uses a feedback circuit 114 to maintain a predetermined integral or current with time.

The feedback circuit 114 includes the resistor 88 and the terminal 115 on the side of the resistor opposite ground, which senses the amount of arc current by the voltage across the resistor. The voltage at 115 is delivered to an integrating circuit 116 which produces a voltage output on line 118 proportional to the integral of current with time over a period of at least one cycle, lasting one seventy-five thousandth of a second (or preferably a few cycles). The voltage at 118 is delivered to a difference circuit 120 which compares the voltage on line 118 to a predetermined voltage delivered on line 122 which represents the desired average current. The difference is represented by a signal on line 124 which is delivered to a switch controller 126. The switch controller 126 uses the difference to adjust the time during which each switch 74, 76 is closed. If the integral current (line 118) is less than the predetermined amount (line 122), then the time period during which each switch is closed is increased slightly, while if the integral current is too great, then the period during which each switch is closed is reduced. In this way, the arc current is maintained at a predetermined average level during a predetermined time, regardless of variations in impedance between the electrodes. When the duration of the pulses to the primary, indicated at 130, are reduced, this results in a lower voltage and current input to the electrodes, but does not substantially change the sinusoidal characteristics of the current.

For an optical fiber of a diameter of 125 micrometers lying in a contact and electrodes spaced 1.524mm (0.060 inch) apart. Applicant has found that the application of a sinusoidal arc current of about 20 milliamperes (root mean square) for a period of about 4 seconds produces a lens of the desired diameter of about 190 micrometers. The sinusoidal arc current at a frequency of about 75kHz has been found to produce lenses of consistent diameters and positions on the contacts.

Thus, the invention provides a method and apparatus for melting an end portion of an optical fiber into a lens, which produces a lensed fiber of high strength having a lens surface of high quality. This is accomplished by applying an electric arc between electrodes lying on opposite sides of the fiber end portion, with the arc being of a plurality of seconds duration, and being terminated and reignited at a rate of a plurality of thousands of times per second. Higher quality is obtained with an interruption rate of over 10kHz, and preferably over 1000kHz, as by applying an alternating current arc of a frequency of about 75kHz. For fiber diameters between about 0.127mm (0.005 inch) and 0.254mm (0.010 inch) the current is preferably of an average intensity of about 30 milliamperes, and is continued for a period of between 3 and 7 seconds. Applicant believes that the high frequency causes minute oscillations that are significant for the minute molten ball (under about 0.381mm (0.015 inch) diameter for under about 0.254mm (0.010 inch) fibers) . Also, that they result in corrective currents in the molten ball that better distribute heat in the glass of the optical fiber to resist weakening, and that homogenize the molten ball to avoid crevices in the lens. In any case, it is found that the high frequency does produce more reliable lensed fibers.

The invention also provides a method and apparatus for producing an electric arc for melting an optical fiber into a lens, which avoids the creation of difficult-to-predict resonances in the fiber during the melting thereof. This is accomplished by maintaining a varying arc, which varies substantially sinusoidally to avoid harmonics of large amplitude. The sinusoidal current is produced in a relatively simple circuit, by applying pulses to the primary of the transformer and coupling the secondary of the transformer through a capacitor to an electrode, with the other electrode coupled to the other side of the secondary winding of the transformer. The inductance of the transformer and capacitance of the capacitor are chosen which have a resonance at the desired frequency, and the pulse input to the primary of the transformer is at substantially that resonant frequency. The arc current is sensed, and the period of duration of each pulse delivered to the transformer primary winding is adjusted to maintain a predetermined integral of current with time.

Although particular embodiments of the invention have been described and illustrated herein, it is recognized that modifications and variations may readily occur to those skilled in the art, and consequently, it is intended that the claims be interpreted to cover such modifications and equivalents.

## Claims

1. A method of forming a lens (12) at the end (36) of an optical fibre (14), including the steps of locating the end (36) of the optical fiber (14) between a pair of electrodes (24,26), establishing an electric arc (32) between the electrodes for melting the end of the optical fiber to provide a lens (12) having a diameter greater than that of the optical fiber and thereafter repeatedly terminating and restarting the arc (32) a plurality of thousands of times per second comprising the step of varying the arc current substantially sinusoidally for a predetermined period of time in order to vibrate the molten end of the optical fiber yet avoiding creation of harmonics and thereby improve the quality of the lens (12), and the step of establishing an arc including delivering a series of pulses (130) to a primary (64) of a transformer (66), coupling one side (84) of the secondary (80) of the transformer through a capacitor (86) to the other side (82) of the secondary via a path which includes the arc (32); the capacitor (86) and the transformer (66) forming a resonant circuit, and the frequency of the pulses (130) being substantially equal to the resonant frequency of the resonant circuit (66,86).

2. The method as claimed in claim 1, characterised by the step of sensing the integral of arc current with time and varying the duration of the pulses (130) to maintain a predetermined average arc current.

3. The method as claimed in claim 1 or claim 2, characterised in that the optical fiber (14) has a diameter of no more than about 0.254mm (0.010 inch), and in that the arc (32) is terminated and restarted a plurality of tens of thousands of times per second.

4. The method as claimed in any preceding claim, characterised in that the fiber (14) has a diameter of between 0.127mm and 0.254mm (0.005 inch and 0.010 inch), in that the average arc current is of the order of 20 milliamperes, and in that the arc (32) is extinguished and the lens (12) allowed to cool after the arc has continued 3for a period of between 3 and 7 seconds.

5. Apparatus for forming one end (36) of an optical fiber (14) into a lens (12) comprising a pair of electrodes (24,26) having spaced tips (40,42), means (18) for holding the fiber end between electrode tips, circuit means (30) coupled to the electrodes for applying electricity to them which establishes an arc (32) between the electrode tips of an intensity and duration which melts the fiber end into a lens (12) having a greater diameter than that of the fiber and the circuit means (30) being constructed for initiating an arc between the electrode tips and thereafter terminating and restarting the arc repeatedly at a rate of a plurality of thousands of times per second characterised in that the circuit means (30) is constructed for varying the arc current substantially sinusoidally to avoid creation of harmonics, and includes: a transformer (66) having primary (64) and secondary (80) windings, the secondary winding (80) having first and second terminals (82,84) means (74,76,126) for applying pulses (130) to the primary winding (64); means defining a capacitor (86) coupling the first terminal (84) of the secondary winding to one (24) of the electrodes; means (88,78) coupling the other (26) of electrodes to the second terminal (82) of the secondary winding (80), the inductance of the secondary winding (80) and the reflected inductance of the primary winding (64) together with the capacitance defining a resonant circuit of a predetermined resonant frequency, the pulse applying means (74,76,126) being constructed to apply pulses (130) at a rate substantially equal to the resonant frequency.

6. The apparatus as claimed in claim 5, characterised by means (116,120) for sensing current flow between the electrodes; and by the means for applying pulses including means 9126) being responsive to the current sensed by the current flow sensing means (116,120) for varying the duration of the pulses to maintain a predetermined average current flow between said electrodes.

7. The apparatus as claimed in any of claims 5 to 6, characterised by a voltage multiplying circuit (90) connected between opposite sides of first-mentioned capacitor (86), the multiplying circuit being of a large type which includes a plurality of multiplier capacitors (91) connected in series and a plurality of diode means for repeatedly charging the multiplier capacitors until the voltage across the first-mentioned capacitor (86) reaches a level at which an initial arc is formed between the electrode tips (40,42).

8. The apparatus as claimed in any of claims 5 to 7, characterised in that the fiber (14) has a diameter of no more than about 0.010 inch, and the circuit means (30) is constructed to apply AC current at a frequency of over 10kHz.

9. The apparatus as claimed in any of claims 5 to 8, characterised in that the fiber (14) has a diameter of no more than about 0.254mm (0.01 inch), and the circuit means (30) is constructed to flow current at an average magnitude on the order of 30 milliamperes for a period of between 3 and 7 seconds, at a rate of terminations and new initiations of at least about 100kHz.

## Patentansprüche

1. Verfahren zur Bildung einer Linse (12) an dem Ende (36) einer optischen Faser (14), mit den Schritten:
Positionieren des Endes (36) der optischen Faser (14) zwischen einem Paar Elektroden (24, 26),
Erzeugen eines elektrischen Bogens (32) zwischen den Elektroden zum Zweck des Schmelzens des Endes der optischen Faser, um eine Linse (12) zu schaffen, die einen Durchmesser aufweist, der größer als derjenige der optischen Faser ist, und danach wiederholtes Beenden und Neustarten des Bogens (32) mehrere tausendmale pro Sekunde,
aufweisend,
den Schritt des Variierens des Bogenstroms im wesentlichen sinusförmig für eine vorbestimmte Zeitdauer, um das geschmolzene Ende der optischen Faser in Vibration zu versetzen und dennoch die Erzeugung von Harmonischen zu vermeiden und dadurch die Qualität der Linse (12) zu verbessern,
wobei der Schritt des Erzeugens eines Bogens die Lieferung einer Serie von Impulsen (130) an die Primärseite (64) eines Transformators (66) umfaßt, wobei eine Seite (84) der Sekundärseite (80) des Transformators über einen Kondensator (86) an die andere Seite (82) der Sekundärseite über einen den Bogen (32) umfassenden Weg gekoppelt wird;
wobei der Kondensator (86) und der Transformator (66) eine Resonanzschaltung bilden und die Frequenz der Impulse (130) im wesentlichen gleich der Resonanzfrequenz der Resonanzschaltung (66, 86) ist.

2. Verfahren nach Anspruch 1, gekennzeichnet durch den Schritt des Abfühlens des zeitlichen Integrals des Bogenstroms und des Veränderns der Dauer der Impulse (130), um einen vorbestimmten mittleren Bogenstrom zu erhalten.

3. Verfahren nach Anspruch 1 oder Anspruch 2, dadurch gekennzeichnet, daß die optische Faser (14) einen Durchmesser von nicht mehr als etwa 0,254 mm (0,010 inch) aufweist, und daß der Bogen (32) mehrere zehntausendmal pro Sekunde beendet und neu gestartet wird.

4. Verfahren gemäß einem der vorausgehenden Ansprüche, dadurch gekennzeichnet, daß die Faser (14) einen Durchmesser zwischen 0,127 mm und 0,254 mm (0,005 inch und 0,010 inch) aufweist, daß der mittlere Bogenstrom im Größenbereich von 20 Milliampere liegt und daß der Bogen (32) gelöscht und der Linse (12) ein Abkühlen erlaubt wird, nachdem der Bogen für eine Zeitdauer zwischen 3 und 7 Sekunden andauerte.

5. Vorrichtung zum Formen eines Endes (36) einer optischen Faser (14) in eine Linse (12), umfassend ein Paar Elektroden (24, 26) mit beabstandeten Spitzen (40, 42), einer Einrichtung (18) zum Halten des Faserendes zwischen den Elektrodenspitzen, eine zwischen die Elekroden gekoppelte Schaltungseinrichtung (30), um diesen Elektrizität zuzuführen, die zwischen den Elektrodenspitzen einen Bogen (32) mit einer Intensität und Dauer erzeugt, die zum Schmelzen des Faserendes in eine Linse (12) führen, deren Durchmesser größer ist als derjenige der Faser, wobei die Schaltungseinrichtung (30) ausgelgt ist zum Initiieren eines Bogens zwischen den Elektrodenspitzen und zum nachfolgenden wiederholten Beenden und Neustarten des Bogens mit einer Rate von mehreren tausendmalen pro Sekunde, dadurch gekennzeichnet, daß die Schaltungseinrichtung (30) ausgelegt ist zum Variieren des Bogenstroms im wesentlichen sinusförmig, um die Erzeugung von Harmonischen zu verhindern, und daß die Schaltungseinrichtung (30) aufweist: einen Transformator (66) mit einer Primärwicklung (64) und einer Sekundärwicklung (80), wobei die Sekundärwicklung (80) erste und zweite Anschlüsse (82, 84) aufweist, eine Einrichtung (74, 76, 126) zum Anlegen von Impulsen (130) an die Primärwicklung (64); eine Einrichtung zum Definieren eines Kondensators (86), welcher den ersten Anschluß (84) der Sekundärwicklung mit einer (24) der Elektroden koppelt; eine Einrichtung (88, 78), welche die andere (26) der Elektroden mit dem zweiten Anschluß (82) der Sekundärwicklung (80) koppelt, wobei die Induktivität der Sekundärwicklung (80) und die reflektierte Induktivität der Primärwicklung (64) zusammen mit der Kapazität eine Resonanzschaltung einer vorbestimmten Resonanzfrequenz definieren und die Einrichtung zum Anlegen von Impulsen (74, 76, 126) ausgelegt ist, um Impulse (130) mit einer Rate im wesentlichen gleich der Resonanzfrequenz anzulegen.

6. Vorrichtung nach Anspruch 5, gekennzeichnet durch eine Einrichtung (116, 120) zum Abfühlen des Stromflusses zwischen den Elektroden; und dadurch, daß die Einrichtung zum Anlegen von Impulsen eine Einrichtung (126) aufweist, die auf den von der Stromflußabfühleinrichtung (116, 120) abgefühlten Strom anspricht, um die Dauer der Impulse zu verändern und einen vorbestimmten mittleren Stromfluß zwischen den Elektroden aufrechtzuerhalten.

7. Vorrichtung nach einem der Ansprüche 5 oder 6, gekennzeichnet durch eine Spannungsmultiplizierschaltung (90), die zwischen entgegengesetzte Seiten des erstgenannten Kondensators (86) geschaltet ist, wobei die Multiplizierschaltung von einem großen Typ ist, der eine Mehrzahl von Verfielfacherkondensatoren (91) aufweist, die in Reihe geschaltet sind, und eine Mehrzahl von Diodeneinrichtungen zum wiederholten Aufladen der Verfielfacherkondensatoren, bis die Spannung über dem erstgenannten Kondensator (86) einen Pegel erreicht, bei dem ein Anfangsbogen zwischen den Elektrodenspitzen (40, 42) gebildet wird.

8. Vorrichtung nach einem der Ansprüche 5 bis 7, dadurch gekennzeichnet, daß die Faser (14) einen Durchmesser von nicht mehr als etwa 0,010 inch aufweist, und daß die Schaltungseinrichtung (30) dazu ausgelegt ist, einen Wechselstrom mit einer Frequenz von mehr als 10 kHz anzulegen.

9. Vorrichtung nach einem der Ansprüche 5 bis 8, dadurch gekennzeichnet, daß die Faser (14) einen Durchmesser von nicht mehr als etwa 0,254 mm (0,01 inch) aufweist, und daß die Schaltungseinrichtung (30) für einen Stromfluß mit einer mittleren Größe im Größenbereich von 30 Milliampere für eine Zeitdauer zwischen 3 und 7 Sekunden bei einer Rate von Beendigungen und Neuauslösungen von wenigstens etwa 100 kHz ausgelegt ist.

## Revendications

1. Procédé pour former une lentille (12) à l'extrémité (36) d'une fibre optique (14), comprenant les étapes consistant à positionner l'extrémité (36) de la fibre optique (14) entre un couple d'électrodes (24,26), établir un arc électrique (32) entre les électrodes pour faire fondre l'extrémité de la fibre optique de manière à former une lentille (12) possédant un diamètre supérieur à celui de la fibre optique, puis interrompre et faire redémarrer de façon répétitive l'arc (32) plusieurs milliers de fois par seconde, ceci incluant l'étape consistant à modifier le courant de l'arc de manière qu'il possède une forme sensiblement sinusoïdale pendant un intervalle de temps prédéterminé de manière à faire vibrer l'extrémité fondue de la fibre optique tout en évitant la création d'harmoniques, et améliorer de ce fait la qualité de la lentille (12), et l'étape consistant à établir un arc comprenant l'envoi d'une série d'impulsions (130) au primaire (64) d'un tranformateur (66), le couplage d'un côté (84) du secondaire (80) du transformateur par l'intermédiaire d'un condensateur (86) à l'autre côté (82) du secondaire par l'intermédiaire d'un trajet qui inclut l'arc (32); le condensateur (86) et le transformateur (66) formant un circuit résonnant, et la fréquence des impulsions (130) étant sensiblement égale à la fréquence de résonance du circuit résonnant (66,86).

2. Procédé selon la revendication 1, caractérisé par l'étape de détection de l'intégrale du courant de l'arc dans le temps et de modification de la durée des impulsions (130) pour le maintien d'un courant moyen prédéterminé de l'arc.

3. Procédé selon la revendication 1 ou 2, caractérisé en ce que la fibre optique (14) possède un diamètre non supérieur à environ 0,254 mm (0,010 pouce) et en ce que l'arc (32) est interrompu et à nouveau établi plusieurs dizaines de milliers de fois par seconde.

4. Procédé selon l'une quelconque des revendications précédentes, caractérisé en ce que la fibre (14) possède un diamètre compris entre 0,127 mm et 0,254 mm (0,005 pouce et 0,010 pouce), en ce que le courant moyen de l'arc est de l'ordre de 20 milliampères, et en ce que l'arc (32) est éteint et la lentille (12) se refroidit une fois que l'arc a été établi pendant une durée comprise entre 3 et 7 secondes.

5. Dispositif pour conformer une extrémité (36) d'une fibre optique (14) sous la forme d'une lentille (12), comprenant un couple d'électrodes (24,26) possédant des pointes espacées (40,42), des moyens (18) pour maintenir l'extrémité de la fibre entre les pointes des électrodes, des moyens formant circuit (30) couplés aux électrodes pour appliquer de l'électricité à ces électrodes et qui établissent, entre les pointes des électrodes, un arc (32) possédant une intensité et une durée telles qu'il fait fondre l'extrémité de la fibre en l'amenant sous la forme d'une lentille (12) possédant un diamètre supérieur à celui de la fibre, et les moyens formant circuit (30) étant agencés de manière à déclencher un arc entre les pointes des électrodes, puis à interrompre et à faire redémarrer l'arc de manière répétée à une cadence de plusieurs milliers de fois par seconde, caractérisé en ce que les moyens formant circuit (30) sont agencés de manière à modifier le courant de l'arc d'une manière sensiblement sinusöidale afin d'éviter la création d'harmoniques, et incluent : un transformateur (66) possédant un enroulement primaire (64) et un enroulement secondaire (80), l'enroulement secondaire (80) possédant des première et seconde bornes (82,84), des moyens (74,76,126) pour appliquer des impulsions (130) à l'enroulement primaire (64); des moyens définissant un condensateur (86) accouplant la première borne (84) de l'enroulement secondaire à l'une (24) des électrodes; des moyens (88, 78) accouplant l'autre (26) des électrodes à la seconde borne (82) de l'enroulement secondaire (80), l'inductance de l'enroulement secondaire (80) et l'inductance réfléchie de l'enroulement primaire (64) définissant, conjointement avec la capacité, un circuit résonnant possédant une fréquence de résonance prédéterminée, les moyens (74,76,126) d'application des impulsions étant agencés de manière à appliquer des impulsions (130) à une cadence sensiblement égale à la fréquence de résonance.

6. Procédé selon la revendication 5, caractérisé par des moyens (116,120) pour détecter le flux de courant entre les électrodes; des moyens servant à appliquer les impulsions comprenant les moyens (126) sensibles au courant détecté par les moyens (116,120) de détection du flux de courant de manière à modifier la durée des impulsions afin de maintenir un flux de courant moyen prédéterminé entre lesdites électrodes.

7. Procédé selon l'une quelconque des revendications 5 et 6, caractérisé par un circuit multiplicateur de tension (90) branché entre les côtés opposés du condensateur (86) mentionné en premier, le circuit multiplicateur étant d'un type de grande taille qui comprend une pluralité de condensateurs (91) branchés en série et une pluralité de moyens formés de diodes permettant de charger de façon répétée les condensateurs des multiplicateurs jusqu'à ce que la tension aux bornes du condensateur (86) mentionné en premier lieu atteigne un niveau, pour lequel un arc initial est formé entre les pointes (40, 42) des électrodes.

8. Procédé selon l'une quelconque des revendications 5 à 7, caractérisé en ce que la fibre (14) possède un diamètre non supérieur à environ 0,010 pouce, et les moyens formant circuit (30) sont agencés de manière à appliquer un courant alternatif à une fréquence supérieure à 10 kHz.

9. Dispositif selon l'une quelconque des revendications 5 à 8, caractérisé en ce que la fibre (14) possède un diamètre non supérieur à environ 0,254 mm (0,01 pouce), et les moyens formant circuit (30) sont agencés de manière à faire circuler un courant d'une intensité moyenne de l'ordre de 30 milliampères pendant une durée comprise entre 3 et 7 secondes, à une cadence d'interruptions et de redéclenchements égale au moins à environ 100 kHz.
